Europäisches Patentamt

European Patent Office

Office européen des brevets

(11) Veröffentlichungsnummer: **0 502 289 A1**

## (12) EUROPÄISCHE PATENTANMELDUNG

(21) Anmeldenummer: **92100489.1**

(22) Anmeldetag: **14.01.92**

(51) Int. Cl.5: **B01D 19/02**, B01D 19/04, A62C 5/02

---

(30) Priorität: **04.03.91 DE 4106798**

(43) Veröffentlichungstag der Anmeldung:
**09.09.92 Patentblatt 92/37**

(84) Benannte Vertragsstaaten:
**AT BE CH DE DK ES FR GB IT LI NL SE**

(71) Anmelder: **Total Walther Feuerschutz GmbH**
**Waltherstrasse 51**
**W-5000 Köln 80(DE)**

(72) Erfinder: **Roy, Rainer, Dipl.-Ing.**
**Unterberg 107**
**W-5053 Leichlingen 1(DE)**

---

(54) **Verfahren und Vorrichtung zum Entsorgen eines Schaumes, insbesondere eines Feuerlöschschaumes.**

(57) Die Erfindung besteht aus einem Verfahren und einer Einrichtung zum Entsorgen eines Schaumes, insbesondere eines beim Feuerlöschen oder dergleichen verwendbaren Leicht- und/oder Mittelschaumes. Der Schaum wird mit einem Antischaummittel-Wasser-Gemisch versetzt, von einem Gebläse angesaugt und zerschlagen. Über einen Abscheider wird die entstandene Lösung in einem nachgeschalteten Auffangbehälter gesammelt und mittels einer Pumpe weitergeleitet.

EP 0 502 289 A1

Die Erfindung betrifft ein Verfahren und eine Vorrichtung zum Entsorgen eines beim Feuerlöschen verwendbaren Leicht- und/oder Mittelschaumes o.dgl., der mittels eines Gebläses angesaugt, durch das Gebläse hindurchgeführt und dabei zerschlagen wird, daß der zerschlagene Schaum über einen Abscheider einem Sammelbehälter zugeführt und von dort mittels einer Pumpe weitergeleitet wird.

Beim Feuerlöschschaum handelt es sich um ein Luftschaumverfahren, bei dem Wasser spezifisch leichter gemacht wird, insbesondere gegenüber brennbaren Flüssigkeiten. Dazu wird dem Wasserstrom ein Schaummittel beigemischt und die verschäumungsfähige Lösung in einem Schaumerzeuger durch Ansaugen von Luft verschäumt. Zur Bildung des Schaumes werden verschäumungsfähige Substanzen, die als Schaummittel bezeichnet werden, verwendet. Diese Schaummittel sind zum Teil auf synthetischer Basis aufgebaut und enthalten in bestimmten Anwendungsformen auch spezielle Fluortenside, die zwar eine verbesserte Löschwirkung aufweisen, demgegenüber bei der Entsorgung Schwierigkeiten bereiten. Aus einem vorbestimmten Gemisch aus Wasser und einem entsprechenden Schaummittel kann Schwer-, Mittel- oder Leichtschaum erzeugt werden. Die Schaumarten werden definiert nach ihren Verschäumungszahlen - dem Verhältnis des unverschäumten Gemisches zum erzeugten Schaumvolumen. Schwerschaum hat eine Verschäumungszahl von 4 bis 20, Mittelschaum von 20 bis 200 und Leichtschaum über 200 bis zu 1000. Hieraus ist ersichtlich, daß sowohl Mittel- als auch Leichtschaum große Volumina an Schaum erbringen.

Feuerlöschschaum wird nicht nur im Falle eines Brandes verwendet. Es ist auch unumgänglich Löschschaum für Probezwecke zu erzeugen. Stationäre Leicht- und Mittelschaumanlagen müssen nach erfolgreicher Projektierung durch eine Probeverschäumung abgenommen werden. Außerdem müssen auch im mobilen Einsatz zur Schulung von Feuerwehrleuten Schaumteppiche erzeugt werden. Der Abbau großer Mengen Leicht- oder Mittelschaum bereitet heute aus Umweltschutzgründen Schwierigkeiten. Die zur Erzeugung der Verschäumung erforderlichen Schaummittel sind zwar biologisch abbaubar, dennoch bedeutet ihr unmittelbares Einleiten in Grundwasser oder Kanalisation bzw. in die Kläranlage eine plötzliche Veränderung des dort herrschenden Gleichgewichtes und kann damit zu einer Störung der Wasserbiologie, -chemie führen. Aus diesem Grunde sind vom Gesetzgeber Grenzwerte festgelegt worden, die eine zulässige Einleitung pro Zeiteinheit in das Kanalnetz definieren. Diese Vorgaben können bei der Entsorgung von Probeschäumen oder realen Verschäumungen im Brandfall keinesfalls eingehalten werden.

Bisher mußten die großen, anfallenden Mengen an Schaum mit großen Wassermengen niedergeschlagen werden. Auch kann man den Schaum stehen lassen, so daß er sich von alleine auflöst. Das benötigt aber viel Zeit.

Es wurde bereits vorgeschlagen (DE- 39 31 311.5) den Schaum mittels eines Gebläses einer Prallkammer und einer nachgeschalteten Pumpe von einem Großteil seiner Luft zu befreien, so daß er einen Verschäumungsfaktor von kleiner als 4 aufweist. Die ältere Einrichtung ist apparativ sehr aufwendig.

Der Erfindung liegt die Aufgabe zugrunde ein Verfahren und eine Vorrichtung zu schaffen, mit denen Leicht- und Mittelschaum umweltgerecht und in kurzer Zeit ohne großen Aufwand in eine pumpfähige Lösung mit geringem Volumen umgewandelt wird, wobei die Verschäumungszahl kleiner als 4 ist.

Diese Aufgabe wird dadurch gelöst, daß dem Schaum im Ansaugbereich ein Antischaummittel-Wasser-Gemisch zugeführt wird, wobei das Gemisch aus 2,0 bis 8,0 Gew.-% eines Antischaummittels und 92 bis 98 Gew.-% Wasser besteht und daß zwischen 1,0 und 6,0, vorzugsweise 4,0 Gew.-% des Gemisches bezogen auf die Flüssigkeitsmenge des Schaumes diesem zugeführt wird.

Mit diesem Verfahren wird der Schaum in eine Lösung verwandelt, die ohne weiteres mit einfachsten Mitteln einer weiteren Behandlung zugepumpt werden kann.

Gegenüber der älteren Einrichtung wird mit der Erfindung der Vorteil erreicht, daß der Schaum nur mit einer geringen Menge Wasser verdünnt bzw. niedergeschlagen wird, andererseits aber auf den großen apparativen Aufwand verzichtet werden kann. Zur weiteren Entsorgung kann die Lösung entweder in einen Behälter oder in einen Tankwagen gefüllt werden. Der Tankwagen kann zu einem Klärwerk gebracht werden, wo das Gemisch in einem zweiten Schritt in vernünftiger Dosierung dem Klärwerk zugegeben werden kann. Auch ist es möglich die Entsorgung an Ort und Stelle vorzunehmen, in dem die Lösung in eine Fällungsstufe und/oder Filterstufe geführt wird, in der unter Zugabe eines Flockungshilfsmittels Schaummittel und Wasser getrennt werden. Das so entstandene reine Wasser, kann dann entweder weiter verwendet oder ohne Schwierigkeiten in die Kanalisation gegeben werden.

Der zu entsorgende Schaum kann über eine Schlauchleitung von einem Gebläse angesaugt werden. Bei Berufsfeuerwehren, Werksfeuerwehren und anderen Einrichtungen sind Schaumerzeuger vorrätig. Mit diesen Geräten wird der nicht lagerfähige Schaum an Ort und Stelle erzeugt. Leichtschaumgeneratoren sind am Austrittsstutzen mit einem Diffusor und einem Veredlernetz versehen, mit denen der Schaum erzeugt wird. Werden der Diffusor und das Veredlernetz abgenommen, sowie die Luftansaugöffnung abgedeckt, so kann der Generator als Gebläse arbeiten, an dessen Ausstrittsstutzen der Abscheider angebracht werden kann.

Ausgehend von einer Vorrichtung, die ganz oder teilweise auf einem Fahrzeug montiert und mit einem Gebläse mit Ausgangsstutzen mit Ansaugschlauch versehen ist und bei der an den Austrittsstutzen des Gebläses ein Abscheider für den zerschlagenen Schaum mit einem nachgeschalteten Auffangbehälter mit Pumpe angeschlossen ist, ist eine besonders vorteilhafte Ausbildung der Vorrichtung zur Durchführung des Entsorgungsverfahrens darin zu sehen, daß eine an eine Zufuhrleitung mit Pumpe angeschlossene Düse in den Ansaugbereich des Gebläses eingeführt ist, wobei der Saugstutzen der Pumpe mit einem Behälter für das Antischaummittel-Wasser-Gemisch in Verbindung steht.

Die Düse kann in den Ansaugstutzen des Gebläses oder in den saugseitigen Bereich des Gebläsegehäuses eingeführt sein.

Als Antischaummittel wird eine an sich bekannte Kombination bestehend aus Fettsäuren, Polyglykolen und Emulgatoren in paraffinischen Ölen verwendet. Es können auch handelsübliche Antischaummittel eingesetzt werden.

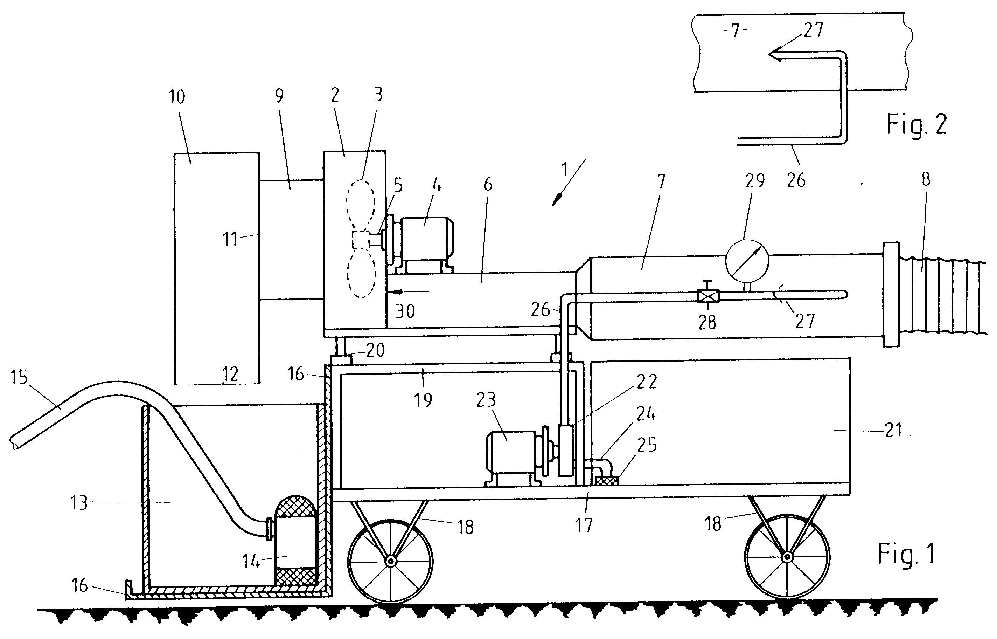

Ein Ausführungsbeispiel ist in der Zeichnung näher beschrieben.

Die Vorrichtung 1 zur Entsorgung eines Feuerlöschschaumes oder dergleichen besteht im wesentlichen aus einem Gebläse 2, einem Abscheider 10, einem Behälter 21 für das Antischaummittel-Wasser-Gemisch mit Pumpe 23 und einem Sammelbehälter 13 mit Pumpe 14.

Das Gebläse 2 mit seinem Rotor 3 wird von einem Motor 4 angetrieben, wobei Motor 4 und Rotor 3 auf einer Welle 5 angeordnet sind. Einerseits ist das Gebläse 2 mit einem Ansaugstutzen 6 mit Mischstrecke 7 versehen, an den ein Schlauch 8 mit einer speziellen Ansaugvorrichtung angeschlossen ist. Andererseits ist ein Austrittsstutzen 9 vorgesehen, der die Eintrittsöffnung 11 für einen Abscheider 10 mit unterer Öffnung 12 bildet. Unterhalb des Abscheiders 10 ist ein Sammelbehälter 13 mit Pumpe 14 und Abfuhrschlauch 15 vorgesehen. Der Sammelbehälter 13 ist über eine Vorrichtung 16 mit einem Wagen 17 mit Fahrwerk 18 verbunden. Über ein Gestell 19 mit Stutzen 20 sind auch das Gebläse 2 und Pumpe 4 auf dem Wagen montiert. Auf dem Wagen 17 ist weiterhin ein Behälter 21 mit Pumpe 22 mit Motor 23 montiert. Der Behälter 21 nimmt das Antischaummittel-Wasser-Gemisch auf. Ein Saugstutzen 24 mit Sieb 25 ist in den Behälter 21 eingeführt. An die Druckseite der Pumpe 22 ist eine Zufuhrleitung 26 in das Zentrum der Mischstrecke 7 eingeführt. Am Ende der Leitung 26 ist eine Düse 27 vorgesehen. Die Leitung 26 ist noch mit einem Regelventil 28 und einem Manometer 29 versehen.

Alternativ kann die Leitung 26 mit Düse 27 auch an der mit Pfeil 30 bezeichneten Stelle in das Gebläse 2 eingeführt werden.

**Patentansprüche**

1. Verfahren zum Entsorgen eines Schaumes, insbesonder eines beim Feuerlöschen verwendbaren Leicht- und/oder Mittelschaumes, der mittels eines Gebläses angesaugt, durch das Gebläse hindurchgeführt und dabei zerschlagen wird, daß der zerschlagene Schaum über einen Abscheider einem Sammelbehälter zugeführt und von dort mittels einer Pumpe weitergeleitet wird, dadurch gekennzeichnet, daß dem Schaum im Ansaugbereich ein Antischaummittel-Wasser-Gemisch zugeführt wird, wobei das Gemisch aus 2,0 bis 8,0 Gew.-% eines Antischaummittels und 92 bis 98 Gew.-% Wasser besteht und daß zwischen 1,0 und 6,0 Gew.-% des Gemisches bezogen auf die Flüssigkeitsmenge des Schaumes diesem zugeführt wird.

2. Verfahren nach Anspruch 1, dadurch gekennzeichnet, daß das Gemisch in den Schaum eingedüst wird.

3. Verfahren nach den Ansprüchen 1 und 2, dadurch gekennzeichnet, daß das Gemisch in den Ansaugstutzen zum Gebläse eingedüst wird.

4. Verfahren nach den Ansprüchen 1 und 2, dadurch gekennzeichnet, daß das Gemisch in die Saugseite des Gebläses eingedüst wird.

5. Vorrichtung zu Durchführung des Verfahrens nach den oder einem oder mehreren der Ansprüche 1 bis 4, wobei die Vorrichtung ganz oder teilweise auf einem Fahrzeug montiert und mit einem Gebläse mit Ansaugstutzen und Ansaugschlauch versehen ist, und daß an den Austrittsstutzen des Gebläses ein Abscheider für den zerschlagenen Schaum mit einem nachgeschalteten Auffangbehälter mit Pumpe angeschlossen ist, dadurch gekennzeichnet, daß eine an eine Zufuhrleitung mit Pumpe angeschlossene Düse in den Ansaugbereich des Gebläses eingeführt ist, wobei der Saugstutzen der Pumpe mit einem Behälter für das Antischaummittel-Wasser-Gemisch in Verbindung steht.

6. Vorrichtung nach Anspruch 5, dadurch gekennzeichnet, daß die Düse in den als Mischstrecke ausgebildeten Ansaugstutzen des Gebläses eingeführt ist.

7. Vorrichtung nach Anspruch 5, dadurch gekennzeichnet, daß die Düse in den saugseitigen Bereich des Gebläsegehäuses eingeführt ist.

8. Antischaummittel zur Verwendung des Verfahrens nach den Ansprüchen 1 bis 4 bestehend aus einer Kombination von Fettsäuren, Polyglykolen und Emulgatoren in paraffinischen Ölen.

Fig. 2

Fig. 1

EP 0 502 289 A1

Europäisches Patentamt

# EUROPÄISCHER RECHERCHENBERICHT

Nummer der Anmeldung

| | EINSCHLÄGIGE DOKUMENTE | | EP 92100489.1 |

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>WO - A - 91/01 788</u><br>(HENKEL KOMMANDITGESELLSCHAFT AUF AKTIEN)<br> * Zusammenfassung; Seite 2, Zeilen 15-16; Seite 4, Zeilen 5-9 *<br>-- | 1 | B 01 D 19/02<br>B 01 D 19/04<br>A 62 C 5/02 |
| A | <u>US - A - 4 624 745</u><br>(SANDE et al.)<br> * Zusammenfassung *<br>-- | 1 | |
| A | <u>US - A - 3 739 795</u><br>(HYDE et al.)<br> * Anspruch 1 *<br>-- | 1 | |
| A | DR. OTTO-ALBRECHT NEUMÜLLER<br>"Römpps Chemie-Lexikon"<br>8. Auflage, Band 5, 1987,<br>Franckh'sche Verlagshandlung<br>Stuttgart, Seite 3705.<br> * Seite 3705, Zeilen 23-38 *<br>---- | 8 | |

RECHERCHIERTE SACHGEBIETE (Int Cl⁵)

B 01 D

Der vorliegende Recherchenbericht wurde für alle Patentansprüche erstellt.

| Recherchenort | Abschlußdatum der Recherche | Prüfer |
|---|---|---|
| WIEN | 05-06-1992 | WILFLINGER |

EPA Form 1503 03 82